# FASCICULE DE BREVET EUROPEEN

(11) **EP 3 140 145 B1**
(45) Date de publication et mention de la délivrance du brevet: **28.03.2018**
(21) Numéro de dépôt: 15718551.3
(22) Date de dépôt: 09.04.2015
(51) Int. Cl.: B60K 23/08, B60K 17/356

(54) **PROCEDE DE PILOTAGE D'UNE TRANSMISSION HYDROSTATIQUE DE VEHICULE A QUATRE ROUES MOTRICES**
VERFAHREN ZUR STEUERUNG EINES HYDROSTATISCHEN FAHRZEUGGETRIEBES MIT VIER ANTRIEBSRÄDERN
METHOD FOR CONTROLLING A HYDROSTATIC TRANSMISSION OF A VEHICLE WITH FOUR DRIVE WHEELS

(30) Priorité: 06.05.2014 FR 1454088
(43) Date de publication de la demande: 15.03.2017
(73) Titulaire: Renault s.a.s, 92100 Boulogne-Billancourt (FR)
(72) Inventeur: BOUTRON, Olivier, F-27940 Aubevoye (FR); DAMOVILLE, Tony, F-91580 Villeconin (FR)
(86) Numéro de dépôt international: PCT/FR2015/050949
(87) Numéro de publication internationale: WO 2015/170023

(56) Documents cités:
- EP-A2- 0 864 482
- WO-A1-2009/154553
- WO-A1-2010/112684
- WO-A2-2014/048841
- US-A1- 2002 032 512
- US-A1- 2003 234 124

## Description

La présente invention se rapporte au pilotage des transmissions hydrostatiques, en particulier des transmissions hydrostatiques à machine hydraulique de type volumétrique fonctionnant en circuit fermé, sur des véhicules à quatre roues motrices.

Elle concerne les véhicules automobiles à quatre roues motrices à propulsion mixte, mécanique et hydraulique, dans lesquels un essieu est entrainé par une machine hydraulique à l'aide d'énergie hydraulique prélevée sur le différentiel de l'autre essieu, qui est entraîné mécaniquement par un moteur thermique ou électrique.

La transmission mécanique peut être implantée sur l'essieu avant et la transmission hydrostatique sur l'essieu arrière, mais l'invention s'applique dans les mêmes conditions sur la disposition inverse, pourvu que la cylindrée de la pompe et celle du moteur soient identiques.

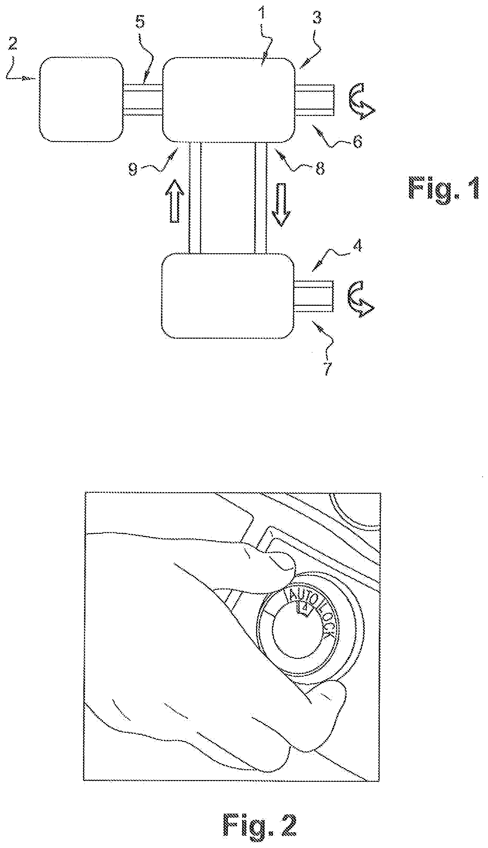

La figure 1 est un schéma de principe de chaîne cinématique concernée. Sur ce schéma, on a fait apparaître le moteur d'entraînement thermique, électrique, ou hybride 2 du véhicule, la pompe hydraulique 3 et un moteur hydraulique 4. Le moteur d'entraînement 2 entraîne la pompe 3 par un arbre de transmission commun 5. L'axe 6, entraîné par le moteur d'entraînement 2, est relié à un premier essieu, par exemple l'essieu avant. Le moteur hydraulique 4 entraîne un deuxième axe 7, relié à un deuxième essieu, par exemple l'essieu arrière. Les deux conduits hydrauliques 8, 9 relient le moteur 4 et la pompe 3. Les caractéristiques du circuit hydraulique (cylindrée pompe, cylindrée moteur, fuite interne, fuite régulée, perte de charge,...) déterminent l'efficacité de ce type de transmission sur faible adhérence, et sa compatibilité avec les manoeuvres sur haute adhérence.

Une transmission hydrostatique a la propriété de coupler cinématiquement l'essieu arrière avec l'essieu avant : la vitesse moyenne de l'essieu arrière est cinématiquement égale à celle de l'essieu avant. En ligne droite, les roues arrière tournent à la même vitesse que les roues avant, et suivent la même trajectoire rectiligne. En virage, les roues arrière font moins de chemin que les roues avant.

La transmission est normalement réglée pour offrir une efficacité maximale sur faible adhérence. Sur un sol fortement adhérent, la condition de virage entraîne un effet particulier qui est lié au couplage de vitesses des deux essieux, et au comportement de la transmission hydrostatique : cet effet particulier en virage (surtout en virage serré), est que la transmission monte en pression pour forcer l'essieu le moins adhérent à adopter la vitesse de l'autre essieu à l'aide d'un glissement des roues de l'essieu le moins adhérent. Dans cette situation, la transmission hydrostatique monte en pression inutilement, et crée du bruit et des frottements des pneus et des éléments mécaniques en rotation. Par ailleurs, en virage sur route à faible adhérence, il s'ajoute un problème de perte de guidage latéral de l'essieu le moins adhérent, à cause du glissement de ses roues.

Par la publication WO2010/112684A, on connaît un dispositif de commande d'un système de répartition de couple moteur entre deux essieux, comportant un sélecteur à trois positions qui permet au conducteur de sélectionner un premier mode de transmission partiel de la capacité maximum au train arrière, un deuxième mode de transmission totale de la capacité de puissance au train arrière, et un troisième mode d'absence de transmission de couple moteur au train arrière. Ce dispositif associe un type de fonctionnement hydraulique distinct à chaque mode de transmission. La publication EP0864482A divulgue un procédé selon le préambule de la revendication 1. La présente invention vise à simplifier la commande d'une transmission hydrostatique.

Elle prévoit de piloter une transmission hydrostatique entre un état activé, où un couple hydraulique est transmis au deuxième essieu et un état inactivé où il est interrompu, tout en assurant une réponse satisfaisante aux attentes de l'utilisateur sur chacun des modes qu'il peut sélectionner.

Elle propose en particulier que la mise en action, ou à l'arrêt, de la transmission hydrostatique, repose sur la surveillance des conditions d'adhérence des roues du véhicule et de son angle volant. Selon l'invention, le pilotage est déterminé par le choix du conducteur entre un mode à deux roues motrices stable, un mode automatique stable, où la transmission hydrostatique peut être arrêtée ou mise en action en fonction des conditions de roulage du véhicule, et un mode instable où la transmission hydrostatique est activée.

D'autres caractéristiques et avantages de la présente invention ressortiront clairement de la description suivante d'un mode de réalisation non limitatif de celle-ci, en se reportant aux dessins annexés, sur lesquels :
- la figure 1 est un schéma simplifié de transmission hydrostatique,
- la figure 2 illustre le fonctionnement du sélecteur de mode
- la figure 3 illustre la logique de pilotage de la transmission, et
- la figure 4 propose un schéma de gestion des modes de fonctionnement et du bouton de sélection.

Dans une transmission hydrostatique de véhicule à quatre roues motrices à propulsion mixte mécanique et hydraulique concernée par l'invention, telle que celle de la figure 1, le véhicule est entrainé mécaniquement par un moteur d'entraînement 2 du véhicule. Un deuxième essieu est entraîné par une transmission hydrostatique 1 comprenant une machine hydraulique 4 qui utilise l'énergie prélevée par une pompe hydraulique 3 sur le différentiel du premier

Le conducteur a le choix entre trois modes de fonctionnement, intitulés « 4X2 » (deux roues motrices), « AUTO » (automatique) et « 4X4 » ou « LOCK » (verrouillé), à l'aide d'un bouton de sélection rotatif à trois positions (cf. figure 2). Pour des raisons de sécurité, les deux premières positions du bouton sont stables, alors que la commande du mode LOCK est impulsionnelle. L'automate de commande de la transmission hydrostatique 1 suit les instructions du conducteur qui peut sélectionner l'une de ces trois positions. Enfin, le retour du mode LOCK sur le mode AUTO peut s'effectuer automatiquement ou manuellement.

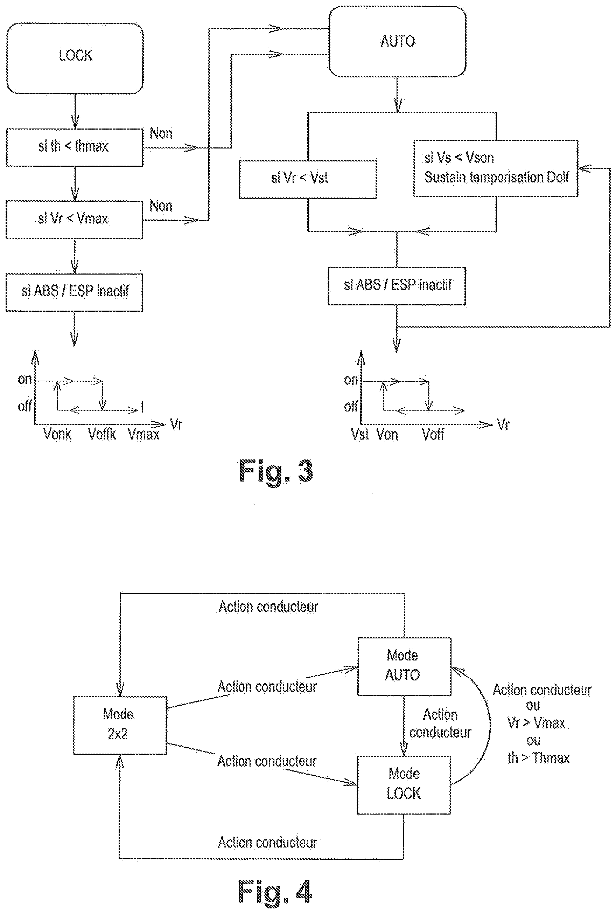

La présente invention propose un schéma logique de gestion particulière des modes AUTO et LOCK du bouton de sélection. Ce schéma est illustré par la figure 3. Il indique les conditions de mise en route et d'arrêt de la transmission 1 sur ces deux positions particulières, en fonction de différents paramètres. Toutefois, le troisième mode 4x2 est toujours rejoint automatiquement, comme mode refuge, en cas de défaut du système hydraulique. Par ailleurs, le mode LOCK ne peut être établi qu'à la demande du conducteur sur son bouton, alors que le mode AUTO peut-être établi, soit par le conducteur, soit par défaut, car le mode LOCK ne reste pas actif en permanence.

Les paramètres pris en compte par l'automate, sont les suivants :
- Vmax : vitesse d'annulation du mode LOCK (par exemple 50 km/h),
- Th : température d'huile en °C,
- Thmax : température d'huile maximum autorisée (par exemple 105°C),
- Vf : vitesse moyenne de l'essieu avant,
- Vr : vitesse moyenne de l'essieu arrière,
- Vrc : vitesse moyenne de l'essieu arrière avec effet de courbe corrigé,
- Vs = Vf - Vr : patinage moyen de l'essieu arrière,
- Vson : seuil de patinage (par exemple 8 rpm) imposant la mise en action du système en mode AUTO,
- Av : angle de volant de direction (°),
- Von : seuil de vitesse réactivant le système en décélération, en km/h (fonction de Th et de Av),
- Voff : seuil de vitesse désactivant le système en accélération, en km/h (fonction de Th et de Av),
- Vonk seuil de vitesse réactivant le système en décélération, en km/h (par exemple 20km/h),
- Voffk : seuil de désactivation du système, en accélération, en km/h (par exemple 30km/h),
- Doff : délai avant désactivation du système en mode auto, sans patinage détecté,
- Vst : seuil de vitesse de l'essieu arrière en dessous duquel le véhicule est considéré comme arrêté.

Cette dernière mesure est optionnelle. Elle permet de palier un éventuel défaut de réactivité du système sur un patinage au décollage à partir de l'arrêt.

La logique de pilotage de la mise en route et de l'arrêt de la transmission hydrostatique en mode AUTO et en mode LOCK est exposée sur la figure 3. Dans tous les cas, la transmission hydrostatique n'est activée que si les systèmes de correction de trajectoire (ESP) et d'assistance au freinage (ABS) sont inactifs.

Dans le mode LOCK, le système est activé tant que les roues arrière tournent à une vitesse inférieure à un seuil Voffk (Vr< Voffk), par exemple de 30km/h. Au-delà, le système est désactivé. Il ne se réactive en mode LOCK que si la vitesse des roues arrières :
a) ne dépasse pas le seuil de sortie du mode LOCK Vmax, et
b) chute en deçà du seuil de ré-enclenchement Vonk, de 20km/h par exemple.

Dans le mode AUTO, le système est activé si :
a) l'écart de vitesse moyen entre les essieux avant et arrière Vs corrigé de la valeur théorique du différentiel lié aux conditions d'angle volant, dépasse un seuil Vson, et
b) la vitesse sur les roues arrières Vr est inférieure à une valeur donnée Voff, qui dépend de l'angle volant et de la température de l'huile.

Dans le mode AUTO, la transmission hydrostatique est désactivée
a) à la mise sous contact, ou
b) en l'absence de détection d'écart de vitesse Vs supérieur au seuil Vson, entre les deux essieux durant une temporisation Doff, ou
c) sur dépassement d'une vitesse seuil Voff sur les roues arrière qui dépend de l'angle volant Av et de la température de l'huile Th.

La figure 4 propose un schéma de gestion pour l'activation et la désactivation de la transmission hydrostatique selon le maniement du bouton de sélection par le conducteur entre ses trois positions 4X2, AUTO et LOCK.

La transmission bascule sur le mode AUTO sur :
a) la coupure du contact véhicule, ou
b) une action du conducteur, ou
c) le dépassement d'une vitesse seuil sur les roues arrières, Vr>Vmax (50km/h par exemple), ou
d) le dépassement d'une consigne de température d'huile Th>Thmax (105°C par exemple).

Le mode AUTO est stable, ou rémanent à la coupure et remise de contact véhicule. Il n'est pas désactivé en fonction des conditions de roulage, mais seulement sur demande du conducteur.

Le mode LOCK est établi à la demande du conducteur à partir du mode 4X2 ou du mode AUTO. En mode LOCK établi, le couple hydraulique délivré par la transmission hydrostatique aux roues du véhicule peut être ajusté par le flux d'huile dépendant de la différence de vitesse entre le moteur et la pompe hydrauliques, dans le but de réduire le patinage.

## Revendications

1. Procédé de pilotage d'une transmission hydrostatique de véhicule à quatre roues motrices à propulsion mixte mécanique et hydraulique, dans lequel un premier essieu est entrainé mécaniquement par un moteur d'entraînement (2) du véhicule, et un deuxième essieu est entraîné par une transmission hydrostatique (1) comprenant une machine hydraulique (4) dont la mise en action ou à l'arrêt repose sur la surveillance des conditions d'adhérence des roues du véhicule et de son angle volant, et qui utilise l'énergie prélevée par une pompe hydraulique (3) sur le différentiel du premier essieu, **caractérisé en ce que** le pilotage de la transmission hydrostatique (1) est déterminé par le choix du conducteur entre un mode à deux roues motrices stable (4X2), un mode automatique (AUTO) stable, où la transmission hydrostatique peut être arrêtée ou mise en action en fonction des conditions de roulage du véhicule, et un mode verrouillé instable (LOCK) où la transmission hydrostatique est activée.

2. Procédé de pilotage selon la revendication 1, **caractérisé en ce que** le mode automatique (AUTO) est rémanent à la coupure et remise de contact du véhicule et qu'il n'est pas désactivé en fonction des conditions de roulage, mais seulement par sélection d'un autre mode de fonctionnement (4X2, LOCK) par le conducteur.

3. Procédé de pilotage selon la revendication 1 ou 2, **caractérisé en ce que** les modes de fonctionnement de la transmission hydrostatique (1) sont sélectionnés l'aide d'un bouton de sélection rotatif à deux positions stables pour les modes (4X2) et (AUTO), et une position impulsionnelle pour le mode (LOCK).

4. Procédé de pilotage selon la revendication 3, **caractérisé en ce que** la transmission hydrostatique (1) passe en mode automatique (AUTO) sur :
a) coupure du contact du véhicule, ou
b) action du conducteur, ou
c) dépassement d'une vitesse seuil sur les roues arrières, ou
d) dépassement d'une consigne de température d'huile.

5. Procédé de pilotage selon l'une des revendications précédentes, **caractérisé en ce que** la transmission hydrostatique (1) est activée en mode automatique (AUTO), si :
a) l'écart de vitesse moyen entre les essieux avant et arrière (Vs) corrigé de la valeur théorique du différentiel lié aux conditions d'angle volant, dépasse un seuil (Vson), et
b) la vitesse sur les roues arrières (Vr) est inférieure à une valeur donnée qui dépend de l'angle volant et de la température de l'huile (Vst).

6. Procédé de pilotage selon l'une des revendications précédentes, **caractérisé en ce que** la transmission hydrostatique (1) est désactivée en mode automatique (AUTO) :
a) à la mise sous contact, ou
b) en l'absence de détection d'écart de vitesse (Vs), entre les deux essieux durant une temporisation (Doff), ou
c) sur dépassement d'une vitesse seuil (Voff) sur les roues arrière qui dépend de l'angle volant (Av) et de la température de l'huile (Th).

7. Procédé de pilotage selon la revendication 6, **caractérisé en ce que** la transmission hydrostatique (1) ne peut se réactiver que si la vitesse des roues arrière (Vr) chute en deçà d'un seuil de ré-enclenchement Von inférieur à (Voff) qui dépend aussi de l'angle volant (Av) et de la température de l'huile (Th).

8. Procédé de pilotage selon l'une des revendications précédentes, **caractérisé en ce que**, le système est activé en mode verrouillé (LOCK), tant que les roues arrière tournent à une vitesse (Vr) inférieure à un seuil (Voffk) .

9. Procédé de pilotage selon la revendication 8, **caractérisé en ce que** si la vitesse des roues arrière (Vr) est supérieure au seuil (Voffk) en mode verrouillé (LOCK), la transmission hydrostatique (1) est désactivée et ne se remet en action que si la vitesse des roues arrières :
a) ne dépasse pas le seuil de sortie (Vmax), et
b) chute en deçà du seuil de ré-enclenchement (Vonk).

10. Procédé de pilotage selon l'une des revendications précédentes, **caractérisé en ce que** la transmission hydrostatique (1) n'est mise en action que si les systèmes de correction de trajectoire (ESP) et d'assistance au freinage (ABS) du véhicule sont inactifs.

## Patentansprüche

1. Verfahren zur Steuerung eines hydrostatischen Fahrzeuggetriebes mit vier Antriebsrädern mit gemischtem mechanischen und hydraulischen Antrieb, wobei eine erste Achse von einem Antriebsmotor (2) des Fahrzeugs mechanisch angetrieben wird und eine zweite Achse von einem hydrostatischen Getriebe (1) angetrieben wird, das eine Hydromaschine (4) aufweist, deren Einschaltung oder Ausschaltung auf der Überwachung der Haftbedingungen der Räder des Fahrzeugs und seines Lenkradwinkels beruht, und die die Energie nutzt, die von einer Hydraulikpumpe (3) am Differential der ersten Achse entnommen wird, **dadurch gekennzeichnet, dass** das Steuern des hydrostatischen Getriebes (1) durch die Wahl des Fahrers zwischen einem stabilen Modus mit zwei Antriebsrädern (4X2), einem stabilen Automatikmodus (AUTO), bei dem das hydrostatische Getriebe in Abhängigkeit von den Fahrbedingungen des Fahrzeugs eingeschaltet oder ausgeschaltet werden kann, und einem instabilen gesperrten Modus (LOCK), in dem das hydrostatische Getriebe aktiviert wird, bestimmt wird.

2. Verfahren zur Steuerung nach Anspruch 1, **dadurch gekennzeichnet, dass** der Automatikmodus (AUTO) beim Ausschalten und Einschalten der Zündung des Fahrzeugs remanent ist und nicht in Abhängigkeit von den Fahrbedingungen, sondern nur durch Auswählen eines anderen Betriebsmodus (4X2, LOCK) durch den Fahrer deaktiviert wird.

3. Verfahren zur Steuerung nach Anspruch 1 oder 2, **dadurch gekennzeichnet, dass** die Betriebsmodi des hydrostatischen Getriebes (1) mit Hilfe eines Drehauswahlschalters mit zwei stabilen Positionen für die Modi (4X2) und (AUTO) und einer Impulsposition für den Modus (LOCK) ausgewählt werden.

4. Verfahren zur Steuerung nach Anspruch 3, **dadurch gekennzeichnet, dass** das hydrostatische Getriebe (1) in Automatikmodus (AUTO) übergeht bei:
a) Ausschalten der Zündung des Fahrzeugs, oder
b) Eingreifen des Fahrers, oder
c) Überschreiten einer Grenzdrehzahl an den Hinterrädern, oder
d) Überschreiten eines Öltemperatursollwerts.

5. Verfahren zur Steuerung nach einem der vorhergehenden Ansprüche, **dadurch gekennzeichnet, dass** das hydrostatische Getriebe (1) im Automatikmodus (AUTO) aktiviert wird, wenn:
a) die durchschnittliche Drehzahlabweichung zwischen der Vorder- und Hinterachse (Vs), die um den theoretischen Wert des Differentials korrigiert wird, das mit den Lenkradwinkelbedingungen verbunden ist, einen Schwellenwert (Vson) überschreitet, und
b) die Drehzahl an den Hinterrädern (Vr) kleiner als ein gegebener Wert ist, der vom Lenkradwinkel und der Öltemperatur (Vst) abhängt.

6. Verfahren zur Steuerung nach einem der vorhergehenden Ansprüche, **dadurch gekennzeichnet, dass** das hydrostatische Getriebe (1) im Automatikmodus (AUTO) deaktiviert wird:
a) bei Zündung, oder
b) bei Abwesenheit der Erkennung einer Drehzahlabweichung (Vs) zwischen den zwei Achsen während einer Verzögerung (Doff), oder
c) bei Überschreiten einer Grenzdrehzahl (Voff) an den Hinterrädern, die von dem Lenkradwinkel (Av) und der Öltemperatur (Th) abhängt.

7. Verfahren zur Steuerung nach Anspruch 6, **dadurch gekennzeichnet, dass** das hydrostatische Getriebe (1) nur reaktiviert werden kann, wenn die Drehzahl der Hinterräder (Vr) unter einen Schwellenwert des Wiedereinschaltens Von sinkt, der niedriger als (Voff) ist, der auch von dem Lenkradwinkel (Av) und der Öltemperatur (Th) abhängt.

8. Verfahren zur Steuerung nach einem der vorhergehenden Ansprüche, **dadurch gekennzeichnet, dass** das System im gesperrten Modus (LOCK) aktiviert wird, solange sich die Hinterräder mit einer Drehzahl (Vr) drehen, die niedriger als ein Schwellenwert (Voffk) ist.

9. Verfahren zur Steuerung nach Anspruch 8, **dadurch gekennzeichnet, dass**, wenn die Drehzahl der Hinterräder (Vr) im gesperrten Modus (LOCK) höher als ein Schwellenwert (Voffk) ist, das hydrostatische Getriebe (1) deaktiviert wird und nur wieder eingeschaltet wird, wenn die Drehzahl der Hinterräder:
a) den Ausgangsschwellenwert (Vmax) nicht überschreitet, und
b) nicht unter den Schwellenwert des Wiedereinschaltens (Vonk) sinkt.

10. Verfahren zur Steuerung nach einem der vorhergehenden Ansprüche, **dadurch gekennzeichnet, dass** das hydrostatische Getriebe (1) nur eingeschaltet wird, wenn das Elektronische Stabilisierungsprogramm (ESP) und das Antiblockiersystem (ABS) inaktiv sind.

## Claims

1. Method for controlling a hydrostatic transmission of a vehicle with four drive wheels powered by a hybrid hydro-mechanical system, in which a first axle is driven mechanically by a drive motor (2) of the vehicle, and a second axle is driven by a hydrostatic transmission (1) comprising a hydraulic machine (4), the activation or the stopping of which is based on the monitoring of the road grip conditions of the wheels of the vehicle and of its steering wheel angle, and which uses the energy taken by a hydraulic pump (3) from the differential of the first axle, **characterized in that** the control of the hydrostatic transmission (1) is determined by the choice of the driver between a stable mode with two drive wheels (4X2), a stable automatic mode (AUTO), in which the hydrostatic transmission can be stopped or activated as a function of the running conditions of the vehicle, and an unstable locked mode (LOCK) in which the hydrostatic transmission is activated.

2. Control method according to Claim 1, **characterized in that** the automatic mode (AUTO) persists after the vehicle ignition is switched off and switched back on again and that it is not deactivated according to the running conditions, but only by selection of another mode of operation (4X2, LOCK) by the driver.

3. Control method according to Claim 1 or 2, **characterized in that** the modes of operation of the hydrostatic transmission (1) are selected using a rotary selection knob with two stable positions for the (4X2) and (AUTO) modes, and an impulsive position for the (LOCK) mode.

4. Control method according to Claim 3, **characterized in that** the hydrostatic transmission (1) switches to automatic mode (AUTO) on:
a) vehicle ignition being switched off, or
b) action of the driver, or
c) exceeding of a threshold speed on the rear wheels, or
d) exceeding of an oil temperature setpoint.

5. Control method according to one of the preceding claims, **characterized in that** the hydrostatic transmission (1) is activated in automatic mode (AUTO), if:
a) the average speed deviation between the front and rear axles (Vs), corrected by the theoretical value of the differential linked to the steering wheel angle conditions, exceeds a threshold (Vson), and
b) the speed on the rear wheels (Vr) is lower than a given value which depends on the steering wheel angle and on the oil temperature (Vst).

6. Control method according to one of the preceding claims, **characterized in that** the hydrostatic transmission (1) is deactivated in automatic mode (AUTO):
a) when the ignition is switched on, or
b) in the absence of the detection of speed deviation (Vs), between the two axles during a time delay (Doff), or
c) on exceeding of a threshold speed (Voff) on the rear wheels which depends on the steering wheel angle (Av) and on the oil temperature (Th).

7. Control method according to Claim 6, **characterized in that** the hydrostatic transmission (1) can be reactivated only if the speed of the rear wheels (Vr) drops below a re-engaging threshold Von lower than (Voff) which depends also on the steering wheel angle (Av) and on the oil temperature (Th).

8. Control method according to one of the preceding claims, **characterized in that**, the system is activated in locked mode (LOCK), as long as the rear wheels turn at a speed (Vr) lower than a threshold (Voffk).

9. Control method according to Claim 8, **characterized in that**, if the speed of the rear wheels (Vr) is higher than the threshold (Voffk) in locked mode (LOCK), the hydrostatic transmission (1) is deactivated and can be reactivated only if the speed of the rear wheels:
a) does not exceed the exit threshold (Vmax), and
b) drops below the re-engaging threshold (Vonk).

10. Control method according to one of the preceding claims, **characterized in that** the hydrostatic transmission (1) is activated only if the course correction (ESP) and braking assistance (ABS) systems of the vehicle are inactive.
